# EUROPEAN PATENT APPLICATION

(11) **EP 3 806 389 A1**
(43) Date of publication of application: **14.04.2021**
(21) Application number: 19807610.1
(22) Date of filing: 23.04.2019
(51) Int. Cl.: H04L 12/24, H04L 12/46, H04L 29/08, H04Q 11/00

(54) **VIRTUAL SUBNET CONSTRUCTING METHOD AND DEVICE, AND STORAGE MEDIUM**

(30) Priority: 24.05.2018 CN 201810509743
(71) Applicant: ZTE Corporation, shenzhen Guangdong 518057 (CN)
(72) Inventor: LI, Zhen, Shenzhen, Guangdong 518057 (CN); CHEN, Jie, Shenzhen, Guangdong 518057 (CN); YU, Hongbin, Shenzhen, Guangdong 518057 (CN); XIAO, Hongyun, Shenzhen, Guangdong 518057 (CN); HUANG, Zhuoyao, Shenzhen, Guangdong 518057 (CN)
(74) Representative: Studio Torta S.p.A.
(86) International application number: PCT/CN2019/083928
(87) International publication number: WO 2019/223482

(57) **Abstract**

Embodiments of the present application disclose a virtual subnet constructing method, a device, and a storage medium. The method includes: extracting unoccupied physical resources from physical resources of a physical optical transmission network; performing resource combination on the unoccupied physical resources, so as to construct a virtual resource layer; and performing resource mapping on the virtual resource layer, so as to construct a virtual subnet.

## Description

### Cross-reference to Related Applications

The present application is filed based on the Chinese patent application No. 201810509743.X filed on May 24, 2018 and claims the priority thereof, and the entirety of the Chinese patent application is incorporated herein by reference.

### Field of the Invention

The present application relates to the technical field of virtualization, and in particular, to a virtual subnet constructing method, a device, and a storage medium.

### Background of the Invention

In current commercial network architecture, operators usually use virtualization technologies such as the virtual local area network (VLAN), the virtual private network (VPN), the active and programmable network (APN) and the overlay network. However, these technologies usually do not have a common technical standard, and portability between technologies is poor. In an era when new technologies such the cloud computing and the software defined network (SDN) emerge, the independent virtual private network established by protocol encapsulation can no longer meet current requirements.

Network resource virtualization is a process of abstracting, pooling, and redistributing resources of an underlying physical network, and effectively solves the problem of coexistence of multiple virtual networks. For example, multiple virtual networks or virtual sub-networks existing in parallel can be realized on the public network infrastructure through methods such as abstraction, reconstruction, and isolation. A virtual network formed in such a way can use and control its exclusive network resources in the manner of a physical network, so that logical separation between two roles, i.e., the network infrastructure and the network service, can be realized.

For the physical optical transmission network, the virtualization technology can enable categorization of a transmission mode of the optical transmission network, which increases the quality of service (QoS) of network service transmission. However, abstract resources of the physical optical transmission network are dynamic, random, and complex. Accordingly, when the virtualization technology is applied to the optical transmission network, it is difficult to maintain development and utilization of underlying physical abstract resources with a higher resource utilization rate. As a result, further development and application of the virtualization technology are hindered, and meanwhile large-area efficient operation of the optical transmission network cannot be realized.

### Summary of the Invention

Embodiments of the present application intend to provide a virtual subnet constructing method, a device, and a storage medium, so as to provide a utilization rate of physical resources during a process of realizing virtualization.

A virtual subnet constructing method in an embodiment of the present disclosure includes steps of:
extracting unoccupied physical resources from physical resources of a physical optical transmission network;
performing resource combination on the unoccupied physical resources, so as to construct a virtual resource layer; and
performing resource mapping of the virtual resource layer, so as to construct a virtual subnet.

A software defined network controller device in an embodiment of the present disclosure includes:
a resource extracting module, which is configured to extract unoccupied physical resources from physical resources of a physical optical transmission network;
a resource combining module, which is configured to perform resource combination on the unoccupied physical resources, so as to construct a virtual resource layer; and
a subnet constructing module, which is configured to perform resource mapping of the virtual resource layer, so as to construct a virtual subnet.

A software defined network controller device in an embodiment of the present disclosure includes: a processor and a memory. The memory stores computer programs for constructing a virtual subnet, and the processor executes the computer programs so as to implement steps of the above method.

A computer readable storage medium in an embodiment of the present disclosure stores computer programs for constructing a virtual subnet. The computer programs, when executed by at least one processor, implement steps of the above method.

In respective embodiments of the present application, by extracting unoccupied physical resources from physical resources of a physical optical transmission network and performing resource combination on the unoccupied physical resources, constructing of a virtual resource layer is completed; and by performing resource mapping of the virtual resource layer, constructing of a virtual subnet is completed, so that the utilization rate of the physical resources can be improved during the process of realizing virtualization, in particular during the process of realizing virtualization under a high-load condition.

### Brief Description of the Drawings

Fig. 1 is a flowchart of a virtual subnet constructing method according to an embodiment of the present application;
Fig. 2 is a schematic diagram showing a relationship of a virtual subnet, a virtual resource layer, and a physical resource layer according to an embodiment of the present application;
Fig. 3a and Fig. 3b are schematic diagrams showing a resource mapping relationship of a virtual subnet according to an embodiment of the present application;
Fig. 4 is a flowchart of an alternative virtual subnet constructing method according to an embodiment of the present application;
Fig. 5 is a schematic diagram of a structure of an alternative software defined network controller device according to an embodiment of the present application; and
Fig. 6 is a schematic diagram of a structure of another alternative software defined network controller device according to an embodiment of the present application.

### Detailed Description of the Embodiments

In order to solve the problem in existing technologies, embodiments of the present application provide a virtual subnet constructing method, a device, and a storage medium. The present application will be further described in detail with reference to the accompanying drawings and the embodiments. It should be understood that specific embodiments described herein are only used for explaining the present application, rather than limiting the present application.

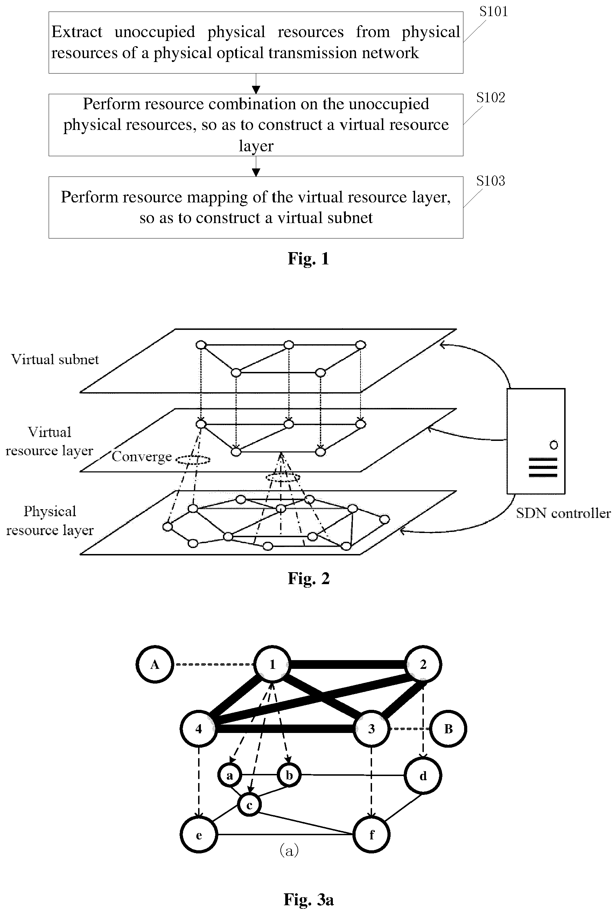

An embodiment of the present application provides a virtual subnet constructing method, specifically a virtual subnet constructing method for a physical optical network under a high-load condition. As shown in Fig. 1, the method includes:
a step S101 of extracting unoccupied physical resources from physical resources of a physical optical transmission network;
a step S102 of performing resource combination on the unoccupied physical resources, so as to construct a virtual resource layer; and
a step S103 performing resource mapping of the virtual resource layer, so as to construct a virtual subnet.

In the present embodiment, by extracting unoccupied physical resources from physical resources of a physical optical transmission network and performing resource combination on the unoccupied physical resources, constructing of a virtual resource layer is completed; and by performing resource mapping of the virtual resource layer, constructing of a virtual subnet is completed, so that a utilization rate of the physical resources can be improved during a process of realizing virtualization, in particular during a process of realizing virtualization under a high-load condition.

Virtual subnet in the present embodiment may also be referred to as virtual subnet of transmission.

For example, during the process of realizing virtualization for the physical optical transmission network, in particular during the process of realizing virtualization under a high-load condition, when the virtual subnet of transmission is constructed, it is inevitable that "fragment resources" that are difficult to use exist in physical nodes or physical transmission links. Existence of these "fragment resources" greatly restricts a utilization rate of underlying network resources, so that there is a disadvantage that superiority in the utilization rate brought about by the virtualization technology cannot be maximized. However, in the present embodiment, a virtual resource layer is constructed, so that physical resources may be combined by the virtual resource layer, and further the utilization rate of the physical resources is improved by combination of the physical resources.

In the present embodiment, physical resource may also be referred to as physical abstract resource; physical optical transmission network may also be referred to as physical optical network; physical node may also be referred to as node for short, and includes physical exchange node which may be referred to as exchange node for short; physical transmission link may also be referred to as physical link, transmission link or link, and underlying network resource may also be referred to as physical resource; and unoccupied (or unused) physical resources include fragment resources and idle resources.

The method in the present embodiment may be implemented under control of a software defined network (SDN) controller, and may also be implemented in an SDN controller device.

SDN technology is a new type of network architecture developed in recent years. By using this technology, a forwarding plane and a control plane can be separated, so as to ultimately achieve the purpose of centralized control. The method in the present embodiment may be implemented on the basis of SDN architecture, so as to realize full scheduling of public physical infrastructure by an advantage of centralized control of an SDN. Moreover, it will be more convenient to establish a controller for a single virtual subnet on the basis of SDN controlled architecture, and efficient and reliable mapping of a virtual network may be realized by the SDN. Specifically, physical resources may be extracted by the SDN, and the virtual resource layer is constructed based on the physical resources extracted by the SDN.

For example, as shown in Fig. 2, constructing of the virtual subnet starts from a bottom layer (a physical resource layer). Physical resources in the physical resource layer are extracted under unified and centralized control of the SDN controller, so as to construct the virtual resource layer. Logical nodes and logical links of the virtual resource layer are respectively formed by combining multiple exchange nodes and physical links of the physical resource layer, and a topological structure of the virtual resource layer is the same as a topological structure of the virtual subnet. The virtual subnet is formed by directly mapping on the basis of the virtual resource layer, and provides service under control of the SDN.

Optical network architecture is defined based on software, and the architecture includes public physical infrastructure of multiple different types or geographical domains and an SDN controller. By means of a virtual mapping algorithm, the SDN controller can make a virtual sub-system of transmission meeting different specification requirements according to needs of a user; and if necessary, the SDN controller can allocate a sub-controller system, so that the user can manage network resources of a virtual subnet used. That is, resource mapping is performed on the virtual resource layer by the SDN, so as to construct the virtual subnet.

In some embodiments, if the physical optical network is under a heavy-load condition, it is certain that a large number of network resource fragments exist in the physical optical network. Existence of these fragments has greater influence on a mapping algorithm of a virtual network, so that a higher failure rate occurs for a constructing result of the virtual subnet.

The present embodiment provides a virtual subnet constructing method.

According to the method, in the physical optical network under the high-load condition, the fragments in the physical optical network are sorted and combined by means of the newly added virtual resource layer without changing the basic virtual mapping algorithm, so as to form a logical node or a logical link. Physical nodes to be mapped by the virtual mapping algorithm are changed from the physical resource layer to the virtual resource layer, so as to realize constructing of the virtual subnet.

The method in the present embodiment ensures that a mapping algorithm between the virtual subnet and the virtual resource layer and a mapping algorithm between the virtual subnet and the physical resource layer are consistent. Meanwhile, a mapping manner between the virtual resource layer and the physical resource layer avoids waste of fragment resources, and a virtual resource layer is reconstructed by integrating to carry a request of the virtual subnet at an upper layer, so that a resource utilization rate of the physical optical network is improved.

An embodiment of the present application further provides a virtual subnet constructing method, and the method includes:
a step S101 of extracting unoccupied physical resources from physical resources of a physical optical transmission network;
a step S102 of performing resource combination on the unoccupied physical resources, so as to construct a virtual resource layer; and
a step S 103 of performing resource mapping of the virtual resource layer, so as to construct a virtual subnet.

In the present embodiment, the step S102 of performing resource combination on the unoccupied physical resources so as to construct a virtual resource layer includes steps of: determining that one-to-one mapping between the unoccupied physical resources and physical resource requirements of the virtual subnet cannot be realized; and performing resource combination on the unoccupied physical resources so as to construct a virtual resource layer.

In the present embodiment, alternatively, prior to the step of determining that one-to-one mapping between the unoccupied physical resources and physical resource requirements of the virtual subnet cannot be realized, the method includes a step of determining that the unoccupied physical resources meet the physical resource requirements of the virtual subnet.

In the present embodiment, alternatively, prior to the step of performing resource combination on the unoccupied physical resources so as to construct a virtual resource layer, the method includes steps of: determining that one-to-one mapping between the unoccupied physical resources and the physical resource requirements can be realized; and performing, according to a preset virtual resource mapping algorithm, mapping of the unoccupied physical resources, so as to construct the virtual subnet.

Herein, the unoccupied physical resources include unoccupied link resources in respective physical links and unoccupied node resources in respective physical nodes. The physical resource requirements include link resource requirements of respective virtual links and node resource requirements of respective virtual nodes.

In the present embodiment, alternatively, manners of determining whether or not one-to-one mapping between the unoccupied physical resources and physical resource requirements of the virtual subnet can be realized include: determining, according to the unoccupied link resources in the respective physical links and the link resource requirements of the respective virtual links, whether or not one-to-one mapping between the respective virtual links and the respective physical links can be realized; and determining, according to the unoccupied node resources in the respective physical nodes and the node resource requirements of the respective virtual nodes, whether or not one-to-one mapping between the respective virtual nodes and the respective physical nodes can be realized.

Herein, the virtual resource layer includes logical links and logical nodes.

In the present embodiment, alternatively, the step of performing, according to a virtual topological structure of the virtual subnet, combination on the unoccupied physical resources includes steps of: combining, according to the link resource requirements of the respective virtual links of the virtual subnet and according to the virtual topological structure of the virtual subnet, the unoccupied link resources into respective logical links; and combining, according to the node resource requirements of the respective virtual nodes of the virtual subnet and according to the virtual topological structure of the virtual subnet, the unoccupied node resources into respective logical nodes.

In the present embodiment, alternatively, performing resource combination on the unoccupied physical resources so as to construct a virtual resource layer includes: performing, according to a virtual topological structure of the virtual subnet, resource combination on the unoccupied physical resources; and performing, according a preset virtual resource mapping algorithm, mapping of combined physical resources, so as to construct the virtual resource layer.

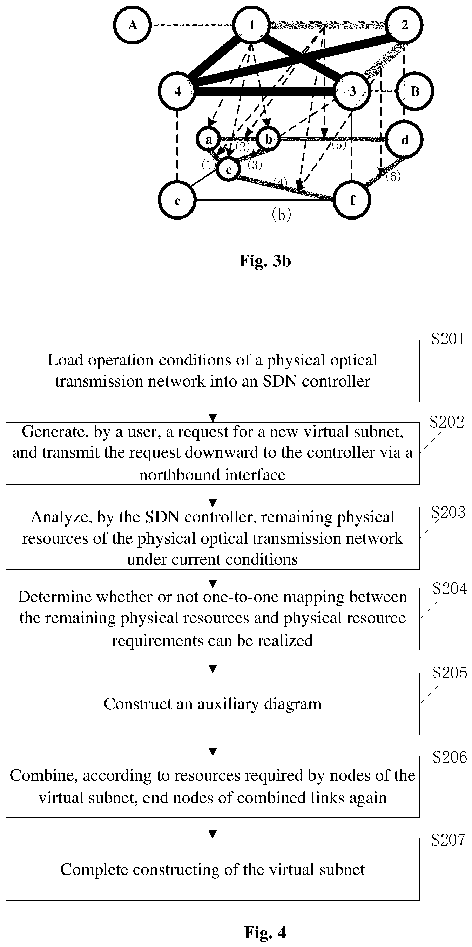

For example, in the present embodiment, constructing of the virtual subnet is solved mainly from two aspects, i.e., the node and the link. As shown in Figs. 3a and Figs. 3b, each of A and B represents a node to be mapped (i.e., a virtual node) in a network topological structure of the virtual subnet; 1, 2, 3, and 4 represent logical physical nodes in the virtual resource layer; a, b, c, d, e, and f represent physical nodes in the physical optical network; and (1) to (6) represent links having remaining fragment resources in physical optical network links.

In the present embodiment, mapping of the virtual link and mapping of the node for the virtual subnet are solved in the physical optical network under the high-load condition, and an overall analysis on remaining physical resources in the physical optical network is performed by the SDN controller, so that associated links having "fragment resources" in the network will be extracted and are combined according to mutual relationships of these links so as to form the virtual resource layer. For example, sizes of remaining physical resources (including fragment resources and idle resources) in physical links α, β, and γ are respectively 10, 15, and 20. A size of a resource applied for by a link in the virtual subnet is 40. The physical links α, β, and γ form a logical physical link 1. A size of the remaining physical resource of the logical physical link 1 is 45, which can meet a mapping requirement of the virtual link.

After logical links that can be mapped are found for all virtual links, end nodes of the logical links will be combined according to a size of the resource applied for by a virtual node, so as to realize mapping between the virtual node and the logical node and finally realizing a mapping relationship between the virtual subnet and the physical optical network.

The virtual subnet constructing method provided in the present embodiment can not only improve the resource utilization rate of the physical optical network but also realize constructing of the virtual subnet without changing the mapping algorithm.

In the present embodiment, since a manner of establishing a virtual resource layer is used, it is ensured that the physical optical network under the heavy-load condition can make full use of network resource fragments to form a virtual subnet and meanwhile play a role of mapping transition, and an effect that the method in the present embodiment may be used for all other virtual mapping algorithms to improve effectiveness of the virtual mapping algorithms.

By using the method in the present embodiment, waste of fragment resources is avoided in mapping of the virtual network, and network fragment resources are made full use of to reconstruct a virtual resource subnet to carry business, which effectively improves the utilization rate of network resources and improves a network environment of a physical entity. After the virtual resource layer is formed, the virtual resource layer plays a transition role between a virtual layer (and a virtual subnet layer) and a physical layer, so as to further improve flexibility of network mapping.

According to the method in the present embodiment, the "fragment resources" in the optical transmission network are integrated and used. Compared with existing technologies of virtual network mapping, an effect that a virtual subnet of transmission is constructed in the optical transmission network under the high-load condition is realized, so as to further improve a network resource utilization rate of the transmission network and reduce operation cost of a network.

Alternatively, the method in the present embodiment may be implemented in SDN network architecture, so as to provide a virtual subnet constructing method under network architecture controlled centrally by the SDN. For example, when the optical transmission network is in a high-load situation, the "fragment resources" of the optical transmission network are analyzed and sorted by the SDN controller, so as to obtain quality of remaining physical resources of the current network. A mapping relationship between the virtual resource layer and the physical layer and a mapping relationship between the virtual layer and the virtual resource layer are consistent, so that the method in the present embodiment has better feasibility and operability and reduces waste of underlying network resources while realizing the virtualization technology.

In the present embodiment, after the "fragment resources" in the underlying network resources are managed uniformly, a total of the "fragment resources" forms the virtual resource layer. At this time, mapping between the virtual subnet of transmission and the underlying physical resources may be regarded as mapping between the virtual subnet of transmission and the virtual resource layer. The "virtual resource layer" ensures one-to-one mapping when mapping is performed on the virtual subnet and the physical network, and simplifies a mapping process.

The virtual subnet constructing method under network architecture controlled centrally by the SDN in the present embodiment, as shown in Fig. 4, includes the following steps.

At a step S201, operation conditions of a physical optical transmission network Tp (Np, Lp, Cp, Bp) are loaded into an SDN controller, and network information is stored in the controller. The SDN controller in the present embodiment may be referred to as controller for short.

At a step S202, a user generates a request for a new virtual subnet Tv (Nv, Lv, Cv, Bv), and the request is transmitted downward to the controller via a northbound interface. Herein, N represents a set of nodes in the network; L represents a set of links in the network; C represents exchange capacity of the nodes in the network; and B represents bandwidth capacity of the links in the network.

At a step S203, the SDN controller analyzes remaining physical resources of the physical optical transmission network under current conditions, and compares, according to a size of a network resource applied for by a new virtual subnet, a size of the remaining physical resources with the size of the network resource applied for by the virtual subnet. If the physical optical transmission network does not meet requirements of an application, generation of the virtual subnet fails; and if the physical optical transmission network meets the requirements of the application, the method proceeds to the next step.

At a step S204, when it is determined that the remaining physical resources meet physical resource requirements of the virtual subnet, whether or not one-to-one mapping between the remaining physical resources and the physical resource requirements can be realized is determined.

If one-to-one mapping can be realized, direct mapping is performed on the physical resource layer according to a virtual resource mapping algorithm, so as to complete constructing of the virtual subnet; and if one-to-one mapping cannot be realized, unoccupied physical resources are extracted from the physical resource layer.

For example, when the remaining physical resources of the physical optical transmission network meet the resource applied for by the virtual subnet, the controller will first determine whether or not one-to-one mapping between the remaining physical resources and nodes and links of the virtual topological structure of the virtual subnet can be realized. If one-to-one mapping can be realized, mapping is directly performed on the virtual subnet according to an original mapping solution; and if one-to-one mapping cannot be realized, the method proceeds to the next step.

At a step S205, as shown in Fig. 3a and Fig. 3b, an auxiliary diagram is constructed. Associated nodes and links of the remaining physical resources analyzed by the SDN controller are extracted from the physical optical network separately and form a basis of the virtual resource layer. At this time, a target topology of the virtual resource layer is generated on the basis of the virtual topological structure of the virtual subnet.

First, link resources in the remaining physical resources are combined, and the number of combinations is the number of links of the virtual subnet. After combining is completed, mapping between links in the virtual resource layer and physical links is completed. By combining, logical links are formed, and are used for realizing mapping of the virtual links. That is, according to link resource requirements of respective virtual links of the virtual subnet and according to the virtual topological structure of the virtual subnet, the unoccupied link resources are combined into respective logical links.

At a step S206, after mapping of links of the virtual subnet is completed, end nodes of combined links will be combined again according to resources required by nodes of the virtual subnet, and the number of combinations is the number of end nodes in the virtual subnet.

After combining of physical nodes is completed, mapping between nodes in the virtual resource layer and physical nodes is completed. By combining, logical nodes are formed, and are used for realizing mapping of virtual nodes. That is, according to node resource requirements of respective virtual nodes of the virtual subnet and according to the virtual topological structure of the virtual subnet, the unoccupied node resources are combined into respective logical nodes.

At a step S207, constructing of the virtual resource layer is realized by forming the logical nodes and the logical links in preceding two steps, and topological mapping of the virtual resource layer is completed. At this time, mapping between the virtual subnet and the virtual resource layer needs to be realized according to an original mapping solution. If mapping succeeds, constructing of the virtual subnet is completed.

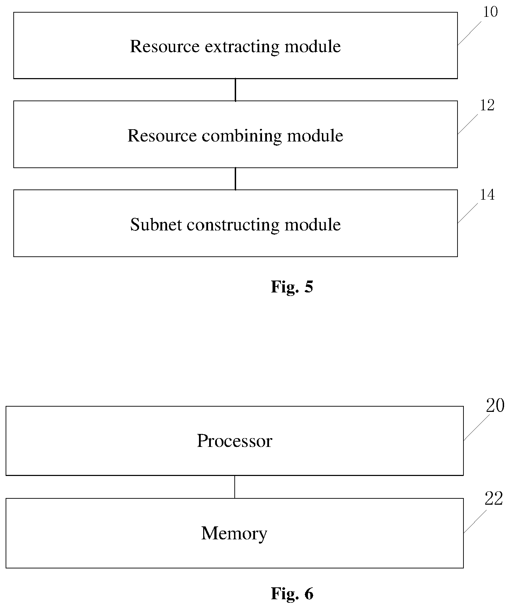

An embodiment of the present application provides a software defined network controller device, as shown in Fig. 5. The device includes:
a resource extracting module 10, which is configured to extract unoccupied physical resources from physical resources of a physical optical transmission network;
a resource combining module 12, which is configured to perform resource combination on the unoccupied physical resources, so as to construct a virtual resource layer; and
a subnet constructing module 14, which is configured to perform resource mapping of the virtual resource layer, so as to construct a virtual subnet.

In the present embodiment, alternatively, the device further includes a determining module : the determining module is configured to, when it is determined that one-to-one mapping between the unoccupied physical resources and physical resource requirements of the virtual subnet cannot be realized, trigger the resource combining module 12; and
the resource combining module 12 is further configured to, after triggering by the determining module, perform resource combination on the unoccupied physical resources, so as to construct the virtual resource layer.

In the present embodiment, alternatively, the determining module is further configured to determine, after it is determined that the unoccupied physical resources meet the physical resource requirements of the virtual subnet, that one-to-one mapping between the unoccupied physical resources and the physical resource requirements of the virtual subnet cannot be realized.

In the present embodiment, alternatively, the determining module is further configured to trigger, when it is determined that one-to-one mapping between the unoccupied physical resources and the physical resource requirements can be realized, the subnet constructing module 14; and
the subnet constructing module 14 is further configured to perform, according a preset virtual resource mapping algorithm, mapping of the unoccupied physical resources, so as to construct the virtual subnet.

In the present embodiment, alternatively, the unoccupied physical resources include unoccupied link resources in respective physical links and unoccupied node resources in respective physical nodes. The physical resource requirements include link resource requirements of respective virtual links and node resource requirements of respective virtual nodes.

In the present embodiment, alternatively, the determining module is configured to: determine, when determining whether or not one-to-one mapping between the unoccupied physical resources and the physical resource requirements of the virtual subnet can be realized, according to the unoccupied link resources in the respective physical links and the link resource requirements of the respective virtual links, whether or not one-to-one mapping between the respective virtual links and the respective physical links can be realized; and determine, according to the unoccupied node resources in the respective physical nodes and the node resource requirements of the respective virtual nodes, whether or not one-to-one mapping between the respective virtual nodes and the respective physical nodes can be realized.

In the present embodiment, alternatively, the virtual resource layer includes logical links and logical nodes.

In the present embodiment, alternatively, the resource combining module 12 is configured to: combine, according to the link resource requirements of the respective virtual links of the virtual subnet and according to a virtual topological structure of the virtual subnet, the unoccupied link resources into respective logical links; and combine, according to the node resource requirements of the respective virtual nodes of the virtual subnet and according to the virtual topological structure of the virtual subnet, the unoccupied node resources into respective logical nodes.

In the present embodiment, alternatively, the resource combining module 12 is configured to: perform, according to a virtual topological structure of the virtual subnet, resource combination on the unoccupied physical resources; and perform, according to a preset virtual resource mapping algorithm, mapping of combined physical resources, so as to construct the virtual resource layer.

It should be noted that, when the software defined network controller device provided in the above embodiment is used to construct a virtual subnet, dividing of the above respective program modules is only an example. In actual application, the above processing and allocation may be completed by different program modules according to needs. That is, an interior structure of the device may be divided into different program modules, so as to complete all of part of the above described processing. In addition, the software defined network controller device provided in the above embodiment and the embodiment of the virtual subnet constructing method belong to the same concept, and reference can be made to the method embodiment for details of a specific implementation process, which will not be repeated herein.

An embodiment of the present embodiment provides a software defined network controller device. As shown in Fig. 6, the device includes a processor 20 and a memory 22. The memory 22 stores computer programs for constructing a virtual subnet. The processor 20 executes the computer programs so as to implement steps of a method in the embodiments of the present application.

The device in the present application does not directly perform resource mapping of a physical resource layer, but extracts physical resources from the physical resource layer and constructs a virtual resource layer according to extracted physical resources, so that performing resource mapping of the virtual resource layer may be realized, thereby completing constructing of a virtual subnet. Such a constructing strategy can improve a utilization rate of the physical resources during a process of realizing virtualization.

The network controller device defined by software in the present embodiment is a device having an SDN controller device.

Specifically, the processor 20 in the present embodiment executes the computer programs so as to implement the following steps of: extracting unoccupied physical resources from physical resources of a physical optical transmission network; performing resource combination on the unoccupied physical resources, so as to construct a virtual resource layer; and performing resource mapping of the virtual resource layer, so as to construct a virtual subnet.

In the present embodiment, alternatively, the processor 20 executes the computer programs so as to implement the following steps of: determining that one-to-one mapping between the unoccupied physical resources and physical resource requirements of the virtual subnet cannot be realized; and performing resource combination on the unoccupied physical resources, so as to construct a virtual resource layer.

In the present embodiment, alternatively, the processor 20 executes the computer programs so as to implement the following step of: determining that the unoccupied physical resources meet the physical resource requirements of the virtual subnet.

In the present embodiment, alternatively, the processor 20 executes the computer programs so as to implement the following steps of: determining that one-to-one mapping between the unoccupied physical resources and the physical resource requirements can be realized; and performing, according to a preset virtual resource mapping algorithm, mapping of the unoccupied physical resources, so as to construct the virtual subnet.

In the present embodiment, alternatively, the unoccupied physical resources include unoccupied link resources in respective physical links and unoccupied node resources in respective physical nodes. The physical resource requirements include link resource requirements of respective virtual links and node resource requirements of respective virtual nodes.

In the present embodiment, alternatively, the processor 20 executes the computer programs so as to implement the following steps of: determining, according to the unoccupied link resources in the respective physical links and the link resource requirements of the respective virtual links, whether or not one-to-one mapping between the respective virtual links and the respective physical links can be realized; and determining, according to the unoccupied node resources in the respective physical nodes and the node resource requirements of the respective virtual nodes, whether or not one-to-one mapping between the respective virtual nodes and the respective physical nodes can be realized.

In the present embodiment, alternatively, the virtual resource layer includes logical links and logical nodes.

In the present embodiment, alternatively, the processor 20 executes the computer programs so as to implement the following steps of: combining, according to the link resource requirements of the respective virtual links of the virtual subnet and according to the virtual topological structure of the virtual subnet, the unoccupied link resources into respective logical links; and combining, according to the node resource requirements of the respective virtual nodes of the virtual subnet and according to the virtual topological structure of the virtual subnet, the unoccupied node resources into respective logical nodes.

In the present embodiment, alternatively, the processor 20 executes the computer programs so as to implement the following steps of: performing, according to the virtual topological structure of the virtual subnet, resource combination on the unoccupied physical resources; and performing, according a preset virtual resource mapping algorithm, mapping of combined physical resources, so as to construct the virtual resource layer.

During specific implementation of the present embodiment, it is certain that reference can be made to previous embodiments.

It should be understood that the memory 22 may be a volatile memory or a non-volatile memory, or may include both the volatile memory and the non-volatile memory. Herein, the non-volatile memory may be a read only memory (ROM), a programmable read-only memory (PROM), an erasable programmable read-only memory (EPROM), an electrically erasable programmable read-only memory (EEPROM), a ferromagnetic random access memory (FRAM), a flash memory, a magnetic surface memory, an optical disc, or a compact disc read-only memory (CD-ROM). The magnetic surface memory may be a magnetic disk memory or a magnetic tape memory. The volatile memory may be a random access memory (RAM), which is used for external cache. For illustration rather than restrictive description, many forms of RAM may be used, for example, a static random access memory (SRAM), a synchronous static random access memory (SSRAM), a dynamic random access memory (DRAM), a synchronous dynamic random access memory (SDRAM), a double data rate synchronous dynamic random access memory (DDRSDRAM), an enhanced synchronous dynamic random access memory (ESDRAM), a synclink dynamic random access memory (SLDRAM), and a direct rambus random access memory (DRRAM). The memory 22 described in the present embodiment intends to include, but is not limited to, these types of and any other types of memory.

A method provided in the above embodiments of the present disclosure may be applied to the processor 20, or may be implemented by the processor 20. The processor 20 may be an integrated circuit chip having a capability of signal processing. In an implementation process, respective steps of the above-mentioned method may be completed by an integrated logical circuit in the form of hardware and instructions in the form of software in the processor 20. The above processor may be a general-purpose processor, a digital signal processor (DSP), or other programmable logic device, discrete gate or transistor logic device, discrete hardware components, and so on. The processor 20 may implement or execute respective methods, steps or logic diagrams disclosed in respective embodiments of the present application. The general-purpose processor may be a micro-processor or any conventional processor. The steps of a method disclosed in the embodiments of the present disclosure may be executed and completed by a hardware coding processor directly, or may be executed and completed by a combination of hardware and software modules. The software modules may be disposed in a storage medium, and the storage medium is disposed in the memory 22. The processor 20 reads information in the memory 22 and uses the hardware thereof to complete steps of an above-mentioned method.

In an exemplary embodiment, the software defined network controller device may be implemented by one or more of an application specific integrated circuit (ASIC), a DSP, a programmable logic device (PLD), a complex programmable logic device (CPLD), a field-programmable gate array (FPGA), a general-purpose processor, a controller, a micro controller unit (MCU), a microprocessor, or other electronic element, so as to execute the above-mentioned method.

An embodiment of the present application provides a computer readable storage medium. The storage medium stores computer programs for constructing a virtual subnet. The computer programs, when executed by at least one processor, implement steps of a method in embodiments of the present application.

The computer readable storage medium in the present embodiment may be an RAM memory, a flash memory, an ROM memory, an EPROM memory, an EEPROM memory, a register, a hard disk, a mobile hard disk drive, a CD-ROM, or any other forms of storage medium known in the art. One storage medium may be coupled to the processor, so that the processor can read information from the storage medium and can write information into the storage medium; or the storage medium may be a part of the processor, and the processor and the storage medium may be disposed in a specific integrated circuit.

In the several embodiments provided in the present application, it should be understood that, the disclosed devices and methods may be implemented by other manners. The above described embodiments of the device are only exemplary. For example, units are divided according logical functions only, and other manners of dividing may be used in actual implementation. For example, multiple units or components may be combined or may be integrated to another system, or some features may be omitted or may not be executed. In addition, coupling, direct coupling, or communication connection among respective parts shown or discussed may be indirect coupling or communication connection via some interfaces, devices or units, and may be electrical, mechanical or in other forms.

The above-mentioned units described as discrete parts may be or may not be physically separated. Parts shown as units may be or may not be physical units. That is, the parts may be disposed at one location, and may also be distributed to multiple network units. Some or all units may be selected, according to actual needs, to realize the purpose of the solution of the present embodiment.

In addition, respective functional units in respective embodiments of the present application may all be integrated into one processing unit; or each of the respective units is used as one single unit; or two or more units are integrated into one unit. The above-mentioned integrated units may be implemented in the form of hardware, and may also be implemented in the form of a combination of hardware and software functional units.

Those ordinary skilled in the art may understand that: all steps or some steps for implementing the above method embodiments may be completed by hardware associated with program instructions, and the above-mentioned programs may be stored in a computer readable storage medium and implement, when executed, the steps including the above method embodiments; and the above-mentioned storage medium includes various mediums that can store program codes, such as a portable storage device, an ROM, an RAM, a diskette or an optical disk.

When implemented in the form of the software functional modules and is sold or used as an independent product, the above integrated unit of the present application may also be stored in a computer readable storage medium. Based on such understanding, a technical solution of an embodiment of the present application in essence or the part that makes contribution to the existing technologies may be embodied in the form of a software product. The computer software product is stored in a storage medium, and includes several instructions for enabling a computer device (which may be a personal computer, a server, or a network device) to execute all or part of a method in respective embodiments of the present application. The above-mentioned storage medium includes various mediums that can store program codes, such as a portable storage device, an ROM, an RAM, a diskette or an optical disk.

The methods disclosed in several method embodiments provided in the present application may be combined in any manner if there is no conflict, so as to obtain new method embodiments.

Features disclosed in several product embodiments provided in the present application may be combined in any manner if there is no conflict, so as to obtain new product embodiments.

Features disclosed in several method embodiments or device embodiments provided in the present application may be combined in any manner if there is no conflict, so as to obtain new method embodiments or device embodiments.

The above description only involves specific implementation manners of the present application, and the protection scope of the present application is not limited thereto. Any change or substitution within the technical scope of the present application that can be easily thought of by those skilled in the art shall fall into the protection scope of the present application. Accordingly, the protection scope of the present application shall be determined by the protection scope of the claims.

## Claims

1. A virtual subnet constructing method, comprising steps of:
extracting (S101) unoccupied physical resources from physical resources of a physical optical transmission network;
performing (S102) resource combination on the unoccupied physical resources, so as to construct a virtual resource layer; and
performing (S103) resource mapping of the virtual resource layer, so as to construct a virtual subnet.

2. The method according to claim 1, wherein the step of performing resource combination on the unoccupied physical resources so as to construct a virtual resource layer comprises steps of:
determining that one-to-one mapping between the unoccupied physical resources and physical resource requirements of the virtual subnet cannot be realized; and
performing resource combination on the unoccupied physical resources, so as to construct a virtual resource layer.

3. The method according to claim 2, wherein prior to the step of determining that one-to-one mapping between the unoccupied physical resources and physical resource requirements of the virtual subnet cannot be realized, the method comprises a step of:
determining that the unoccupied physical resources meet the physical resource requirements of the virtual subnet.

4. The method according to claim 3, wherein prior to the step of performing resource combination on the unoccupied physical resources so as to construct a virtual resource layer, the method comprises steps of:
determining that one-to-one mapping between the unoccupied physical resources and the physical resource requirements can be realized; and
performing, according to a preset virtual resource mapping algorithm, mapping of the unoccupied physical resources, so as to construct the virtual subnet.

5. The method according to claim 3 or claim 4, wherein the unoccupied physical resources comprise unoccupied link resources in respective physical links and unoccupied node resources in respective physical nodes, and the physical resource requirements comprise link resource requirements of respective virtual links and node resource requirements of respective virtual nodes.

6. The method according to claim 5, wherein manners of determining whether or not one-to-one mapping between the unoccupied physical resources and physical resource requirements of the virtual subnet can be realized comprise:
determining, according to the unoccupied link resources in the respective physical links and the link resource requirements of the respective virtual links, whether or not one-to-one mapping between the respective virtual links and the respective physical links can be realized; and
determining, according to the unoccupied node resources in the respective physical nodes and the node resource requirements of the respective virtual nodes, whether or not one-to-one mapping between the respective virtual nodes and the respective physical nodes can be realized.

7. The method according to claim 6, wherein the virtual resource layer comprises logical links and logical nodes.

8. The method according to claim 7, wherein the step of performing, according to a virtual topological structure of the virtual subnet, combination on the unoccupied physical resources comprises steps of:
combining, according to the link resource requirements of the respective virtual links of the virtual subnet and according to the virtual topological structure of the virtual subnet, the unoccupied link resources into respective logical links; and
combining, according to the node resource requirements of the respective virtual nodes of the virtual subnet and according to the virtual topological structure of the virtual subnet, the unoccupied node resources into respective logical nodes.

9. The method according to any one of claims 1 to 4, wherein the step of performing resource combination on the unoccupied physical resources so as to construct a virtual resource layer comprises steps of:
performing, according to a virtual topological structure of the virtual subnet, resource combination on the unoccupied physical resources; and
performing, according a preset virtual resource mapping algorithm, mapping of combined physical resources, so as to construct the virtual resource layer.

10. A software defined network controller device, comprising:
a resource extracting module (10), which is configured to extract unoccupied physical resources from physical resources of a physical optical transmission network;
a resource combining module (12), which is configured to perform resource combination on the unoccupied physical resources, so as to construct a virtual resource layer; and
a subnet constructing module (14), which is configured to perform resource mapping of the virtual resource layer, so as to construct a virtual subnet.

11. The software defined network controller device according to claim 10, wherein the device further comprises: a determining module, which is configured to, when it is determined that one-to-one mapping between the unoccupied physical resources and physical resource requirements of the virtual subnet cannot be realized, trigger the resource combining module, and
wherein the resource combining module is further configured to, after triggering by the determining module, perform resource combination on the unoccupied physical resources, so as to construct the virtual resource layer.

12. The software defined network controller device according to claim 11, wherein the determining module is further configured to determine, after it is determined that the unoccupied physical resources meet the physical resource requirements of the virtual subnet, that one-to-one mapping between the unoccupied physical resources and the physical resource requirements of the virtual subnet cannot be realized.

13. The software defined network controller device according to claim 12, wherein the determining module is further configured to trigger, when it is determined that one-to-one mapping between the unoccupied physical resources and the physical resource requirements can be realized, the subnet constructing module; and
wherein the subnet constructing module is further configured to perform, according a preset virtual resource mapping algorithm, mapping of the unoccupied physical resources, so as to construct the virtual subnet.

14. The software defined network controller device according to claim 12 or claim 13, wherein the unoccupied physical resources comprise unoccupied link resources in respective physical links and unoccupied node resources in respective physical nodes, and the physical resource requirements comprise link resource requirements of respective virtual links and node resource requirements of respective virtual nodes.

15. The software defined network controller device according to claim 14, wherein the determining module is configured to: determine, when determining whether or not one-to-one mapping between the unoccupied physical resources and the physical resource requirements of the virtual subnet can be realized, according to the unoccupied link resources in the respective physical links and the link resource requirements of the respective virtual links, whether or not one-to-one mapping between the respective virtual links and the respective physical links can be realized; and determine, according to the unoccupied node resources in the respective physical nodes and the node resource requirements of the respective virtual nodes, whether or not one-to-one mapping between the respective virtual nodes and the respective physical nodes can be realized.

16. The software defined network controller device according to claim 15, wherein the virtual resource layer comprises logical links and logical nodes.

17. The software defined network controller device according to claim 16, wherein the resource combining module is configured to: combine, according to the link resource requirements of the respective virtual links of the virtual subnet and according to a virtual topological structure of the virtual subnet, the unoccupied link resources into respective logical links; and combine, according to the node resource requirements of the respective virtual nodes of the virtual subnet and according to the virtual topological structure of the virtual subnet, the unoccupied node resources into respective logical nodes.

18. The software defined network controller device according to any of claims 10 to 13, wherein the resource combining module is configured to: perform, according to a virtual topological structure of the virtual subnet, resource combination on the unoccupied physical resources; and perform, according to a preset virtual resource mapping algorithm, mapping of combined physical resources, so as to construct the virtual resource layer.

19. A software defined network controller device, comprising: a processor (20) and a memory (22), wherein the memory (22) stores computer programs for constructing a virtual subnet, and the processor (20) executes the computer programs so as to implement steps of the method according to any one of claims 1 to 9.

20. A computer readable storage medium, wherein the storage medium stores computer programs for constructing a virtual subnet, wherein the computer programs, when executed by at least one processor, implement steps of the method according to any one of claims 1 to 9.
